# EUROPEAN PATENT SPECIFICATION

(11) **EP 2 687 066 B1**
(45) Date of publication and mention of the grant of the patent: **28.08.2019**
(21) Application number: 11861770.3
(22) Date of filing: 10.10.2011
(51) Int. Cl.: H05B 37/02, H05B 33/08

(54) **INPUT VOLTAGE TRANSFER APPARATUS FOR A LIGHT EMITTING DIODE LIGHTING SYSTEM**
EINGANGSSPANNUNGSÜBERTRAGUNGSVORRICHTUNG FÜR EINE BELEUCHTUNGSEINRICHTUNG MIT LEUCHTDIODEN
APPAREIL DE TRANSFERT DE TENSION D'ENTRÉE POUR UN SYSTÈME D'ÉCLAIRAGE À DIODE ÉLECTROLUMINESCENTE

(30) Priority: 18.03.2011 KR 20110024492
(43) Date of publication of application: 22.01.2014
(73) Proprietor: LG Innotek Co., Ltd., Seoul, 04637 (KR)
(72) Inventor: KIM, Young Jong, Seoul 100-714 (KR); PARK, Sang Hyun, Seoul 100-714 (KR); KIM, Sang Man, Seoul 100-714 (KR); JUNG, Woo Chang, Seoul 100-714 (KR); KOO, Gwan Bon, Seoul 100-714 (KR); HUH, Dong Young, Seoul 100-714 (KR); YOON, Seok, Seoul 100-714 (KR)
(74) Representative: DREISS Patentanwälte PartG mbB
(86) International application number: PCT/KR2011/007490
(87) International publication number: WO 2012/128436

(56) References cited:
- EP-A1- 2 257 124
- EP-A2- 1 465 330
- EP-A2- 2 288 237
- WO-A1-2005/115058
- WO-A1-2008/029108
- JP-A- 2001 016 804
- JP-A- 2002 354 790
- JP-A- 2006 319 172
- JP-A- 2011 048 978
- KR-A- 20110 027 328
- KR-B1- 100 877 521
- US-A1- 2010 090 618

## Description

### Technical Field

The present disclosure relates to an input voltage transfer apparatus for a Light Emitting Diode (LED) lighting system.

### Background Art

Generally, since LEDs are semiconductor devices, LEDs have long service life, fast lighting speed, low consumption power, and excellent color reproductivity.

Moreover, LEDs are robust to impact, and it is easy to miniaturize and thin LEDs.

Therefore, lighting systems with LEDs are recently being introduced, and research is continuously being conducted on an LED lighting system that more effectively controls the amount of a current supplied to LEDs. EP2288237A2 and WO2005/115058A1 disclose circuits for lighting devices.

### Disclosure of Invention

### Technical Problem

Embodiments provide an input voltage transfer apparatus for an LED lighting system, which turns on a switching element when a zero voltage is inputted as an input voltage, turns on a separate switching element when a non-zero voltage is inputted in a state where the switching element is being turned on, turns on the switching element, which has been turned on when the zero voltage is inputted, for a certain time, and thus can efficiently maintain dimming and prevent flicker from occurring in an LED.

### Solution to the Problem

This problem is solved by a system according to the features of claim 1.

In one embodiment, an input voltage transfer apparatus for an LED lighting system includes: a source voltage storage unit storing a source voltage; a zero voltage switching unit turning on according to the source voltage stored in the source voltage storage unit when a zero voltage is inputted; and a nonzero voltage switching unit turning on according to a current applied thereto through the zero voltage switching unit when a nonzero voltage is inputted, wherein when the nonzero voltage switching unit is turned on, the source voltage storage unit discharges the stored source voltage.

In another embodiment, an input voltage transfer apparatus for an LED lighting system includes: a source voltage storage unit storing a source voltage; a zero voltage switching unit turning on according to the source voltage stored in the source voltage storage unit when a zero voltage is inputted; a shutdown signal supply unit receiving the source voltage to supply a shutdown signal for shutting down a control circuit, when the zero voltage is inputted thereto; and a nonzero voltage switching unit turning on according to a current applied thereto through the zero voltage switching unit when a nonzero voltage is inputted, wherein when the nonzero voltage switching unit is turned on, the shutdown signal supply unit is turned off, and the source voltage storage unit discharges the stored source voltage.

### Advantageous Effects of Invention

The input voltage transfer apparatus for an LED lighting system, according to the embodiments, turns on a switching element when a zero voltage is inputted as an input voltage, turns on a separate switching element when a non-zero voltage is inputted in a state where the switching element is being turned on, turns on the switching element, which has been turned on when the zero voltage is inputted, for a certain time, and thus can efficiently maintain dimming and prevent flicker from occurring in an LED.

### Brief Description of Drawings

Fig 1 is a circuit diagram illustrating an input voltage transfer apparatus for an LED lighting system, according to an embodiment.
Fig 2 is a diagram showing a waveform of an input voltage which is inputted to an input voltage transfer apparatus for an LED lighting system according to an embodiment.
Fig 3 is a circuit diagram illustrating a modification example of an input voltage transfer apparatus for an LED lighting system according to an embodiment.

### Mode for the Invention

Hereinafter, exemplary embodiments of the inventive concept will be described in detail with reference to the accompanying drawings. In adding reference numerals for elements in each figure, it should be noted that like reference numerals already used to denote like elements in other figures are used for elements wherever possible. Moreover, detailed descriptions related to well-known functions or configurations will be ruled out in order not to unnecessarily obscure subject matters of the present invention.

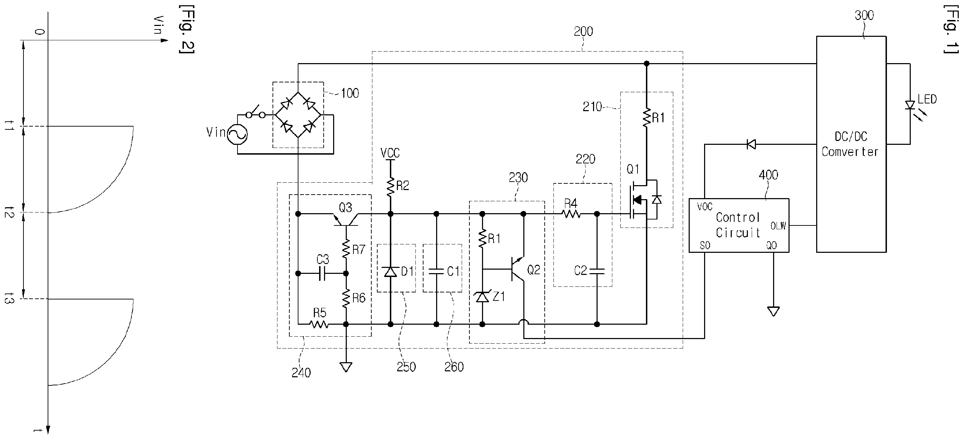

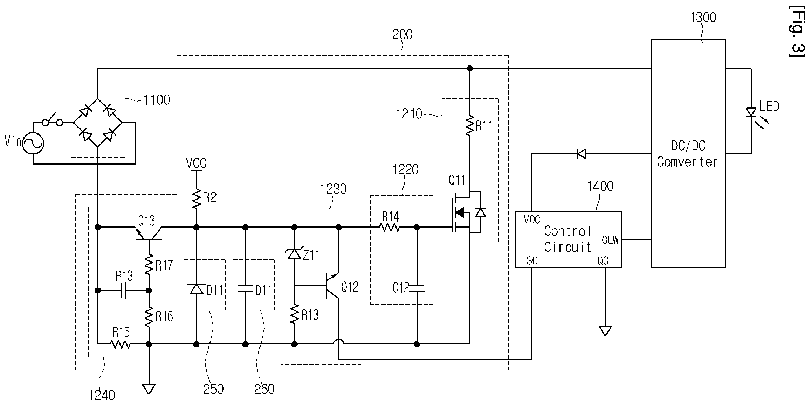

Fig 1 is a circuit diagram illustrating an input voltage transfer apparatus for an LED lighting system, according to an embodiment. Fig 2 is a diagram showing a waveform of an input voltage which is inputted to an input voltage transfer apparatus for an LED lighting system according to an embodiment. Fig 3 is a circuit diagram illustrating a modification example of an input voltage transfer apparatus for an LED lighting system according to an embodiment.

Referring to Fig. 1, an input voltage transfer apparatus 200 for an LED lighting system, according to an embodiment, may include a source voltage storage unit 220, a zero voltage switching unit 210, a shutdown signal supply unit 230, and a nonzero voltage switching unit 240.

The source voltage storage unit 220 stores a source voltage VCC transferred through a resistor R2, in which state the source voltage storage unit 220 discharges the stored source voltage VCC when the nonzero voltage switching unit 240 is turned on. Herein, the source voltage storage unit 220 includes a first resistor R4 and a first capacitor C2. The resistor R2 transfers the source voltage VCC to the source voltage storage unit 220.

The zero voltage switching unit 210 is turned on when a zero voltage is inputted through a bridge circuit 100 (Vin during time t0 - t1 in Fig. 2), but when a nonzero voltage is inputted through the bridge circuit 100 (Vin during time t1 t2 in Fig. 2), the zero voltage switching unit 210 applies a current to the nonzero voltage switching unit 240.

The zero voltage switching unit 210 includes an n-channel metal oxide semiconductor (NMOS) transistor Q1 or an NPN bipolar junction transistor. The resistor R1 transfers an input voltage Vin.

As described above, when the nonzero voltage switching unit 240 is turned on, the source voltage storage unit 220 discharges a stored source voltage VCC, and thus, when a voltage stored in the first capacitor C2 is shifted to less than a threshold voltage of the NMOS transistor Q1, the zero voltage switching unit 210 is turned off.

Therefore, when the nonzero voltage is inputted, a turned-off time of the zero voltage switching unit 210 may be adjusted by regulating a time constant R4^{∗}C2 of the source voltage storage unit 220. That is, even when the zero voltage is inputted and then the nonzero voltage is inputted, the zero voltage switching unit 210 is not turned off but is turned on proportional to the time constant R4^{∗}C2 and then turned off. Accordingly, even when the zero voltage is inputted and then the nonzero voltage is inputted, the zero voltage switching unit 210 and the nonzero voltage switching unit 240 are simultaneously turned on during the time constant R4^{∗}C2 thereby applying a current.

The shutdown signal supply unit 230 is turned on by the source voltage VCC that is applied thereto when the zero voltage is inputted, and supplies a shutdown signal SD for shutting down a control circuit 400 to the control circuit 400. However, when the nonzero voltage switching unit 240 is turned on, the shutdown signal supply unit 230 is turned off and does no longer supply the shutdown signal SD.

The shutdown signal supply unit 230 may include a p-channel MOS (PMOS) transistor or a PNP bipolar junction transistor Q2. The shutdown signal supply unit 230 may further include a Zener diode Z1 connected between a base of the PNP bipolar junction transistor Q2 and a ground. A resistor R3 transfers the source voltage VCC.

When the nonzero voltage is inputted (Vin during time t1 t2 in Fig. 2), the nonzero voltage switching unit 240 is turned on by a current that is applied thereto through the zero voltage switching unit 210.

When the nonzero voltage switching unit 240 is turned on, the source voltage VCC is no longer applied to the source voltage storage unit 220 and the shutdown signal supply unit 230. Thus, the source voltage storage unit 220 discharges a stored source voltage VCC, and the shutdown signal supply unit 230 does not supply the shutdown signal SD.

The nonzero voltage switching unit 240 includes an NMOS transistor or an NPN bipolar junction transistor Q3. Resistors R5 to R7 transfer a current that is applied by the zero voltage switching unit 210. A capacitor C3 prevents a noise signal from being applied.

In the input voltage transfer apparatus 200, the zero voltage switching unit 210 is turned on when the zero voltage is inputted as the input voltage, and then when the nonzero voltage is inputted, the zero voltage switching unit 210 is not immediately turned off but is turned on proportional to the time constant R4^{∗}C2 and then turned off, thus more efficiently maintaining dimming.

Accordingly the input voltage transfer apparatus 200 can more efficiently maintain dimming, and thus prevent flicker from occurring in an LED.

The input voltage transfer apparatus 200 may further include a reverse-current prevention unit 250 that prevents a current from being reversely applied to the zero voltage switching unit 210. The reverse-current prevention unit 250 includes a diode D1 that has a cathode connected to a resistor, and an anode connected to the ground.

The input voltage transfer apparatus 200 may further include an auxiliary storage unit 260 that stores an applied source voltage VCC while the zero voltage is being inputted and then discharges the stored source voltage VCC while the nonzero voltage is being inputted. The auxiliary storage unit 260 includes a second capacitor C1.

A modification example 1200 of the input voltage transfer apparatus 200 according to an embodiment will be described below with reference to Fig. 3. In describing the modification example 1200, however, only a difference between the input voltage transfer apparatus 200 and the modification example 1200 will be described below.

Referring to Fig. 3, the modification example 1200 of the input voltage transfer apparatus 200 includes a shutdown signal supply unit 1230. The shutdown signal supply unit 1230 includes an NMOS transistor or an NPN bipolar junction transistor Q12. The shutdown signal supply unit 1230 may further include a Zener diode Z11 connected between a base of the NPN bipolar junction transistor Q12 and a resistor R12. A resistor R13 transfers the source voltage VCC.

As described above, the input voltage transfer apparatus for an LED lighting system, according to the embodiments, turns on a switching element when a zero voltage is inputted as an input voltage, turns on a separate switching element when a non-zero voltage is inputted in a state where the switching element is being turned on, turns on the switching element, which has been turned on when the zero voltage is inputted, for a certain time, and thus can efficiently maintain dimming and prevent flicker from occurring in an LED.

Although embodiments have been described with reference to a number of illustrative embodiments thereof, it should be understood that numerous other modifications and embodiments can be devised by those skilled in the art. In addition to variations and modifications in the component parts and/or arrangements, alternative uses will also be apparent to those skilled in the art.

## Claims

1. An input voltage transfer system for a Light Emitting Diode (LED) lighting system, the input voltage transfer system comprising:
a bridge circuit (100) rectifying an input voltage (Vin) being coupled to the light emitting diode lighting system and wherein the input voltage (Vin) is inputted to a first and a second terminal of the bridge circuit (100);
**characterized in that** the input voltage transfer system further comprises an input voltage transfer apparatus (200), which comprises:
a source voltage storage unit (220) having a first input connected to a voltage source (VCC) for storing a source voltage;
a zero voltage switching unit (210), having a first terminal connected to a fourth terminal of the bridge circuit (100) and having a second terminal connected to an output of the source voltage storage unit (220) and having a third terminal connected to a ground;
a nonzero voltage switching unit (240) having a first terminal connected to a third terminal of the bridge circuit (100) and having a second terminal connected to the first input of the source voltage storage unit (220) and having a third terminal connected to the ground;
wherein the input voltage transfer apparatus (200) is configured to turn on the zero voltage switching unit (210) when the input voltage (Vin) is zero and based on the source voltage stored in the source voltage storage unit (220); and is configured to then turn on the nonzero voltage switching unit (240) when the input voltage (Vin) is non-zero and a current is applied thereto through the zero voltage switching unit (210);
whereby the input voltage transfer apparatus (200) is further configured then to discharge the source voltage storage unit (220) when the nonzero voltage switching unit (240) turns on, and then to turn off the zero voltage switching unit (210), when a level of the stored source voltage in the source voltage storage unit is below a threshold voltage.

2. The input voltage transfer system according to claim 1, wherein the source voltage storage unit (220) comprises a first resistor (R4) and a first capacitor (C2).

3. The input voltage transfer system according at least one of claim 1 and claim 2, wherein the zero voltage switching unit (210) comprises a MOS transistor (Q1) or a bipolar junction transistor.

4. The input voltage transfer system according at least one of claim 1 to claim 3, wherein the nonzero voltage switching unit (240) comprises a MOS transistor or a bipolar junction transistor.

5. The input voltage transfer system according at least one of claim 1 to claim 4, further comprising a diode (D1); wherein an anode of the diode (D1) connects the ground and a cathode of the diode connects the source voltage storage unit.

6. The input voltage transfer system according at least one of claim 1 to claim 5, further comprising an auxiliary storage unit storing the source voltage which is transferred thereto when the input voltage (Vin) of the zero voltage is being inputted.

7. The input voltage transfer system according to claim 6, wherein the auxiliary storage unit comprises a second capacitor (C12).

8. The input voltage transfer system according to claim 7, the input voltage transfer system further comprising:
a DC-DC converter (300) adjusting a level of the rectified input voltage (Vin) and transferring the adjusted input voltage to light emitting diodes,
a control circuit (400) controlling the operation of the DC-DC converter (300),
the input voltage transfer apparatus (200), which further comprises:
a shutdown signal supply unit (230) connected to the voltage source and the second terminal of the source voltage storage unit (220),
wherein the shutdown signal supply unit (230) is configured to receive the source voltage to supply a shutdown signal for shutting down the control circuit (400), when the input voltage (Vin) is zero,
and then when the nonzero voltage switching unit (240) is turned on, the shutdown signal supply unit (230) is then turned off, and the source voltage storage unit (220) discharges the stored source voltage.

9. The input voltage transfer system according to claim 8, wherein the shutdown signal supply unit (230) comprises a PMOS transistor or a PNP bipolar junction transistor.

10. The input voltage transfer system according to claim 9, wherein the shutdown signal supply unit (230) further comprises a Zener diode connected between a base of the PNP bipolar junction transistor and the ground.

11. The input voltage transfer system according to claim 2, wherein the zero voltage switching unit (210) is turned on depending on a time constant of the first resistor and the first capacitor.

12. The input voltage transfer system according to claim 8, wherein the shutdown signal supply unit (230) comprises a NMOS transistor or a NPN bipolar junction transistor.

13. The input voltage transfer system according to claim 12, wherein the shutdown signal supply unit (230) further comprises a Zener diode connected between a base of the NPN bipolar junction transistor and the source voltage storage unit.

14. The input voltage transfer system according to claim 13, the shutdown signal supply unit (230) further comprising:
a second resistor connected between a base of the NPN bipolar junction transistor and the ground.

## Patentansprüche

1. Eingangsspannungs-Übertragungssystem für ein Leuchtdioden-(LED)-Beleuchtungssystem, wobei das Eingangsspannungs-Übertragungssystem Folgendes umfasst:
eine Brückenschaltung (100), die eine Eingangsspannung (Vin) gleichrichtet und mit dem Leuchtdioden-Beleuchtungssystem verbunden ist, wobei die Eingangsspannung (Vin) an einer ersten und einer zweiten Anschlussklemme der Brückenschaltung (100) eingespeist wird, **dadurch gekennzeichnet, dass** das Eingangsspannungs-Übertragungssystem zudem eine Eingangsspannungs-Übertragungsvorrichtung (200) umfasst,
welche wiederum Folgendes umfasst:
eine Quellenspannungs-Speichereinheit (220) mit einem ersten Eingang, der mit einer Spannungsquelle (VCC) verbunden ist, um eine Quellenspannung zu speichern;
eine Nullspannungsschalteinheit (210) mit einer ersten Anschlussklemme, die mit einer vierten Anschlussklemme der Brückenschaltung (100) verbunden ist, mit einer zweiten Anschlussklemme, die mit einem Ausgang der Quellenspannungs-Speichereinheit (220) verbunden ist, und mit einer dritten Anschlussklemme, die an Masse angeschlossen ist;
eine Nicht-Nullspannungsschalteinheit (240) mit einer ersten Anschlussklemme, die mit einer dritten Anschlussklemme der Brückenschaltung (100) verbunden ist, mit einer zweiten Anschlussklemme, die mit dem ersten Eingang der Quellenspannungs-Speichereinheit (220) verbunden ist, und mit einer dritten Anschlussklemme, die an Masse angeschlossen ist;
wobei die Eingangsspannungs-Übertragungsvorrichtung (200) dazu dient, die Nullspannungsschalteinheit (210) auf der Basis der in der Quellenspannungs-Speichereinheit (220) gespeicherten Quellenspannung einzuschalten, wenn die Eingangsspannung (Vin) null ist, und die Nicht-Nullspannungsschalteinheit (240) einzuschalten, wenn die Eingangsspannung (Vin) ungleich null ist und mittels der Nullspannungsschalteinheit (210) ein Strom an sie angelegt wird;
wobei die Eingangsspannungs-Übertragungsvorrichtung (200) überdies dazu dient, die Quellenspannungs-Speichereinheit (220) zu entladen, wenn die Nicht-Nullspannungsschalteinheit (240) eingeschaltet wird, und die Nullspannungsschalteinheit (210) auszuschalten, wenn ein Pegel der in der Quellenspannungs-Speichereinheit gespeicherten Quellenspannung eine Schwellenspannung unterschreitet.

2. Eingangsspannungs-Übertragungssystem nach Anspruch 1, wobei die Quellenspannungs-Speichereinheit (220) einen ersten Widerstand (R4) und einen ersten Kondensator (C2) umfasst.

3. Eingangsspannungs-Übertragungssystem nach mindestens Anspruch 1 oder Anspruch 2, wobei die Nullspannungsschalteinheit (210) einen MOS-Transistor (Q1) oder einen Bipolartransistor umfasst.

4. Eingangsspannungs-Übertragungssystem nach mindestens einem der Ansprüche 1 bis 3, wobei die Nicht-Nullspannungsschalteinheit (240) einen MOS-Transistor oder einen Bipolartransistor umfasst.

5. Eingangsspannungs-Übertragungssystem nach mindestens einem der Ansprüche 1 bis 4, zudem umfassend eine Diode (D1), wobei eine Anode der Diode (D1) an Masse angeschlossen ist und eine Kathode der Diode mit der Quellenspannungs-Speichereinheit verbunden ist.

6. Eingangsspannungs-Übertragungssystem nach mindestens einem der Ansprüche 1 bis 5, zudem umfassend eine Hilfsspeichereinheit, welche die durch sie übertragene Quellenspannung speichert, wenn die Eingangsspannung (Vin) der Nullspannung eingespeist wird.

7. Eingangsspannungs-Übertragungssystem nach Anspruch 6, wobei die Hilfsspeichereinheit einen zweiten Kondensator (C12) umfasst.

8. Eingangsspannungs-Übertragungssystem nach Anspruch 7, das zudem Folgendes umfasst:
einen DC/DC-Wandler (300), der einen Pegel der gleichgerichteten Eingangsspannung (Vin) reguliert und die regulierte Eingangsspannung an Leuchtdioden überträgt;
eine Steuerschaltung (400), welche den Betrieb des DC/DC-Wandlers (300) steuert,
die Eingangsspannungs-Übertragungsvorrichtung (200), die zudem Folgendes umfasst:
eine Abschaltsignal-Sendeeinheit (230), die mit der Spannungsquelle und der zweiten Anschlussklemme der Quellenspannungs-Speichereinheit (220) verbunden ist, wobei die Abschaltsignal-Sendeeinheit (230) dazu dient, die Quellenspannung zu empfangen, um ein Abschaltsignal zum Abschalten der Steuerschaltung (400) zu senden, wenn die Eingangsspannung (Vin) null ist, wobei die Abschaltsignal-Sendeeinheit (230) ausgeschaltet wird und die Quellenspannungs-Speichereinheit (220) die gespeicherte Quellenspannung entlädt, wenn die Nicht-Nullspannungsschalteinheit (240) eingeschaltet wird.

9. Eingangsspannungs-Übertragungssystem nach Anspruch 8, wobei die Abschaltsignal-Sendeeinheit (230) einen PMOS-Transistor oder einen PNP-Bipolartransistor umfasst.

10. Eingangsspannungs-Übertragungssystem nach Anspruch 9, wobei die Abschaltsignal-Sendeeinheit (230) zudem eine Zenerdiode umfasst, die zwischen einer Basis des PNP-Bipolartransistors und Masse angeschlossen ist.

11. Eingangsspannungs-Übertragungssystem nach Anspruch 2, wobei die Nullspannungsschalteinheit (210) in Abhängigkeit von einer Zeitkonstante des ersten Widerstands und des ersten Kondensators eingeschaltet wird.

12. Eingangsspannungs-Übertragungssystem nach Anspruch 8, wobei die Abschaltsignal-Sendeeinheit (230) einen NMOS-Transistor oder einen NPN-Bipolartransistor umfasst.

13. Eingangsspannungs-Übertragungssystem nach Anspruch 12, wobei die Abschaltsignal-Sendeeinheit (230) zudem eine Zenerdiode umfasst, die zwischen einer Basis des NPN-Bipolartransistors und der Quellenspannungs-Speichereinheit angeschlossen ist.

14. Eingangsspannungs-Übertragungssystem nach Anspruch 13, wobei die Abschaltsignal-Sendeeinheit (230) zudem Folgendes umfasst:
einen zweiten Widerstand, der zwischen einer Basis des NPN-Bipolartransistors und Masse angeschlossen ist.

## Revendications

1. Système de transfert de tension d'entrée pour un système d'éclairage à DEL, ledit système de transfert de tension d'entrée comprenant :
un circuit en pont (100) qui redresse une tension d'entrée (Vin) qui est couplé au système d'éclairage à diode électroluminescente, et dans lequel la tension d'entrée (Vin) alimente une première et une deuxième borne du circuit en pont (100) ;
**caractérisé en ce que** le système de transfert de tension d'entrée comprend en outre :
un appareil de transfert de tension d'entrée (200), qui comprend :
une unité de stockage de tension source (220), dont une première entrée est connectée à une source de tension (VCC) pour stocker une tension source ;
une unité de commutation de tension nulle (210), dont une première borne est connectée à une quatrième borne du circuit en pont (100) et dont une deuxième borne est connectée à une sortie de l'unité de stockage de tension source (220) et dont une troisième borne est connectée à la terre ;
une unité de commutation de tension non nulle (240), dont une première borne est connectée à une troisième borne du circuit en pont (100) et dont une deuxième borne est connectée à la première entrée de l'unité de stockage de tension source (220) et dont une troisième borne est connectée à la terre ;
dans lequel l'appareil de transfert de tension d'entrée (200) est configuré pour allumer l'unité de commutation de tension nulle (210) lorsque la tension entrée (Vin) est nulle et en se basant sur la tension source stockée dans l'unité de stockage de tension source (220) ; et est configuré pour ensuite allumer l'unité de commutation de tension non nulle (240) lorsque la tension entrée est non nulle et un courant est appliqué sur celle-ci par l'intermédiaire de l'unité de commutation de tension nulle (210) ;
grâce à quoi l'appareil de transfert de tension d'entrée (200) est en outre configuré pour ensuite décharger l'unité de stockage de tension source (220) lorsque l'unité de commutation de tension non nulle (240) s'allume, et ensuite pour éteindre l'unité de commutation de tension nulle (210), lorsqu'un niveau de la tension source stockée dans l'unité de stockage de la tension source est inférieur à une tension de seuil.

2. Système de transfert de tension d'entrée selon la revendication 1, dans lequel l'unité de stockage de tension source (220) comprend une première résistance (R4) et un premier condensateur (C2).

3. Système de transfert de tension d'entrée selon au moins l'une de la revendication 1 et de la revendication 2, dans lequel l'unité de commutation de tension nulle (210) comprend un transistor MOS (Q1) ou un transistor à jonctions bipolaires.

4. Système de transfert de tension d'entrée selon au moins l'une des revendication 1 à revendication 3,
dans lequel l'unité de commutation de tension non nulle (240) comprend un transistor MOS ou un transistor à jonctions bipolaires.

5. Système de transfert de tension d'entrée selon au moins l'une des revendication 1 à revendication 4, comprenant en outre une diode (D1) ;
dans lequel une anode de la diode (D1) est connectée à la terre et une cathode de la diode est connectée à l'unité de stockage de la tension source.

6. Système de transfert de tension d'entrée selon au moins l'une des revendication 1 à revendication 5, comprenant en outre une unité de stockage auxiliaire qui stocke la tension source qui est transférée sur celle-ci lorsque la tension d'entrée (Vin) de la tension nulle est entrée.

7. Système de transfert de tension d'entrée selon la revendication 6, dans lequel l'unité de stockage auxiliaire comprend un deuxième condensateur (C12).

8. Système de transfert de tension d'entrée selon la revendication 7, ledit système de transfert de tension d'entrée comprenant en outre :
un convertisseur CC-CC (300) qui règle le niveau d'une tension d'entrée (Vin) redressée et qui transfère la tension d'entrée réglée sur les diodes électroluminescentes,
un circuit de commande (400) qui commande le fonctionnement du convertisseur CC-CC (300),
l'appareil de transfert de tension d'entrée (200), qui comprend en outre :
une unité de fourniture de signal de fermeture (230) connectée à la tension source et à la deuxième borne de l'unité de stockage de tension source (220),
dans lequel l'unité de fourniture de signal de fermeture (230) est configurée pour
recevoir la tension source pour fournir un signal de fermeture pour fermer le circuit de commande (400), lorsque la tension entrée (Vin) est nulle,
et ensuite, lorsque l'unité de commutation de tension non nulle (240) est allumée, l'unité de fourniture de signal de fermeture (230) est ensuite éteinte, et l'unité de stockage de tension source (220) décharge la tension source stockée.

9. Système de transfert de tension d'entrée selon la revendication 8, dans lequel l'unité de fourniture de signal de fermeture (230) comprend un transistor PMOS ou un transistor à jonctions bipolaires PNP.

10. Système de transfert de tension d'entrée selon la revendication 9, dans lequel l'unité de fourniture de signal de fermeture (230) comprend en outre une diode Zener connectée entre une base du transistor à jonctions bipolaires PNP et la terre.

11. Système de transfert de tension d'entrée selon la revendication 2,
dans lequel l'unité de commutation de tension nulle (210) est allumée en fonction d'une constante de temps de la première résistance et du premier condensateur.

12. Système de transfert de tension d'entrée selon la revendication 8, dans lequel l'unité de fourniture de signal de fermeture (230) comprend un transistor NMOS ou un transistor à jonctions bipolaires NPN.

13. Système de transfert de tension d'entrée selon la revendication 12, dans lequel l'unité de fourniture de signal de fermeture (230) comprend en outre une diode Zener connectée entre une base du transistor à jonctions bipolaires NPN et l'unité de stockage de la tension source.

14. Système de transfert de tension d'entrée selon la revendication 13, ladite unité de fourniture de signal de fermeture (230) comprenant en outre :
une deuxième résistance connectée entre une base du transistor à jonctions bipolaires NPN et la terre.
